# EUROPEAN PATENT SPECIFICATION

(11) **EP 0 588 808 B1**
(45) Date of publication and mention of the grant of the patent: **08.10.1997**
(21) Application number: 92909694.9
(22) Date of filing: 22.04.1992
(51) Int. Cl.: B60Q 1/52

(54) **VEHICLE WITH SIREN VICINITY WARNING SIGNAL EMITTER**
FAHRZEUG MIT SIRENENANNÄHERUNGS-WARNSIGNALSENDER
VEHICULE POURVU D'UN EMETTEUR DE SIGNAL D'AVERTISSEMENT DE LA PROXIMITE A SIRENE

(30) Priority: 23.04.1991 IT BO910133
(43) Date of publication of application: 30.03.1994
(73) Proprietor: LABANTI, Marco, I-40121 Bologna (IT)
(72) Inventor: LABANTI, Marco, I-40121 Bologna (IT)
(74) Representative: Dall'Olio, Giancarlo
(86) International application number: IT9200046
(87) International publication number: WO9218352

(56) References cited:
- EP-A- 0 325 888
- DE-A- 2 431 703
- DE-A- 2 920 624
- DE-A- 3 633 368
- DE-A- 3 909 305

## Description

### TECHNICAL FIELD

The invention relates to the technical field concerned with detectors of certain type of signals, and particularly of acoustic signals emitted by first aid vehicles or quick use vehicles (e.g. ambulances, fire brigade vehicles, etc.) or by speedy intervention vehicles used by operative, vigilance or repression bodies (e.g. police, revenue officiers, etc.).

### BACKGROUND ART

It is well known that drivers of vehicles which are located in a place where the above mentioned first aid vehicles happen to run, must make it easier for this latter to travel in any possible way, when the siren is operated.

As a matter of fact this facilitating action can take place only if the driver heard the acoustic signal from the siren.

But this is not always possible, e.g. for deaf people or for those who have problems with hearing, or because of other incidental causes, for instance due to using a protective crash helmet.

Along with the fact that it is not always possible to see the first aid vehicle coming up, this is an inconvenience that could bring about disastrous effects for people and vehicles.

In the EP-A-0 325 888 there is disclosed a warning signal device that has a transmitter unit associated with an emergency vehicle and a receiver unit associated with a road vehicle.

The transmitter unit is actuable to transmit a first signal on actuation of other signal means, such as lights, sirens or other sound generating means.

The receiver unit is adapted to receive said signal and to produce a second signal when the road vehicle is in use, and to send this second signal to a light, the car radio or other sound reproducing apparatus.

In this way the arrival of an emergency vehicle can be easily detected by means of the car radio or the sound reproducing apparatus.

In the DE-A-36 33 368 there is disclosed a system for deactivating a sound source on a motor vehicle when an emergency vehicle is coming near to the motor vehicle. The system includes a transmitter located on the emergency vehicle, and a receiver situated on the motor vehicle. The transmitter includes a coder, a modulator and a regulator, which transmit a signal through an antenna.

The receiver includes a demodulator and a decoder which detect the signal by means of an antenna and operates a toggle connected with the sound source infeed section.

In this way when an emergency vehicle comes near to any motor vehicle equipped with the receiver just described, the sound source, that is the radio or other sound reproducer, is deactivated and the driver can easily hear the sound of the emergency vehicle.

The features of the pre-characterising portion of the claim 1 are known from document EP-A-0 325 882.

### DISCLOSURE OF THE INVENTION

The object of the present invention is to propose a warning signal emitter that operates acoustic or visual signalling means mounted on a vehicle near to the driver as a consequence of acoustic signals being emitted by the sirens mounted on said first aid or quick use vehicles, when they are within a radius of a few hundred meters.

What above is obtained by means of a vehicle with siren vicinity warning signal emitter, that includes:
a first section mounted on said vehicle with siren and connected to said siren, said first section being designed to irradiate the space surrounding said vehicle with siren with electromagnetic waves modulated in accordance to coded signals, as a consequence of said siren being operated;
a second section, mounted on a vehicle in a place near to the driver, designed to receive said electromagnetic waves and to operate acoustic and visual signalling means as a consequence of the recognition of said coded signals.

### BRIEF DESCRITPION OF DRAWINGS

The characteristic features of the invention are pointed out in the following, with a particular reference to the accompanying drawings, in which:
- Fig. 1 is a possible block diagram of a first section of the warning signal emitter;
- Fig. 2 is a possible block diagram of a second section of the warning signal emitter.

### MODES OF CARRYING OUT THE INVENTION

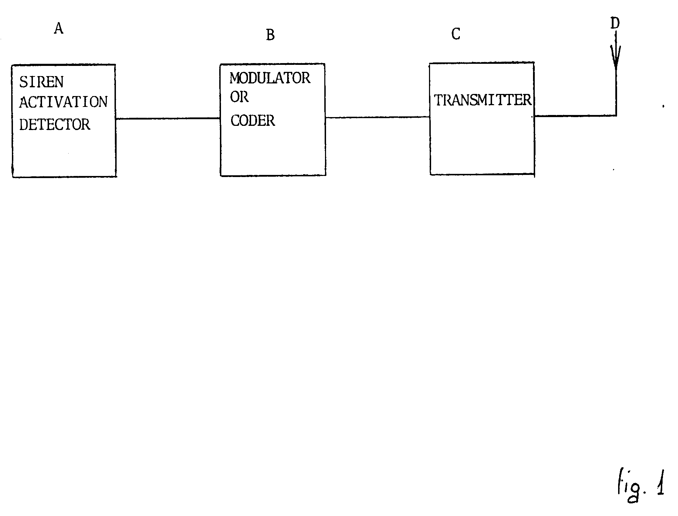

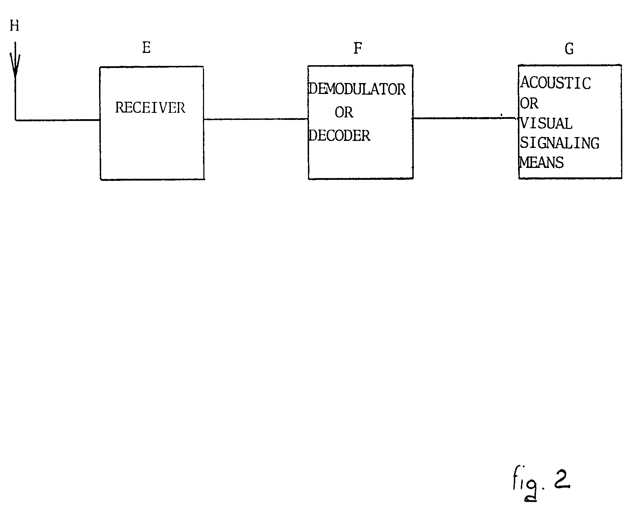

Referring now to these drawings, the warning signal emitter is formed by a first section (Fig. 1) mounted on a first aid or quick use or a speedy intervention vehicle, that is of course provided with a siren, and by a second section (Fig. 2) mounted on a vehicle, in a place near to the driver.

The first section includes three units A,B,C first, second and third respectively, connected in cascade to each other.

The first unit A is connected to the siren via an interface, and has the task of detecting when the siren is operated.

The second unit B includes a RF generator and a coder or modulator (both of known type).

The third unit C includes a power amplifier stage connected to a transmitting antenna D, or transmitter.

The second section comprises three units E,F,G fourth, fifth and sixth respectively, connected in cascade to each other.

The fourth unit E includes a receiver (of known type), provided with a receiving antenna H.

The fifth unit F includes a demodulator or decoder, whereas the sixth unit G includes visual and acoustic signaling means (e.g. a lamp and a buzzer).

When the siren is operated, the first section is also operated.

Then the transmitter C, through the antenna D, irradiate the space surrounding the first aid vehicle with electromagnetic wave formed by a carrier of preset frequency modulated in accordance with code signals.

These waves are picked up by the antenna H, and the particular code is recognized by the decoder F, which in turn operates the signaling means G.

It is necessary for the transmitter to irradiate with signal as powerful as to be received and recognised, within a radius of at most 300 m; this distance is more than enough to allow the driver to move the vehicle to a good position for facilitating the transit of the vehicle with siren.

### INDUSTRIAL APPLICABILITY

The visual signaling means are specifically used for deaf people, while acoustic signaling means are used by drivers wearing a protective crash helmet.

In this case the buzzer is located inside the helmet.

The technical feature herein porposed gives the possibility to warn the drivers about the coming up of vehicles with a siren that is operated.

In this way possible crashes with the first aid and similar vehicles are avoided.

## Claims

1. Vehicle with siren vicinity warning signal emitter, including a first section mounted on said vehicle with siren in order to irradiate the space surrounding said vehicle with siren with an electromagnetic wave carried coded signal as a consequence of said siren being operated, and a second section mounted on a further vehicle and located near to the driver, for receiving said electromagnetic waves and consequently operating signalling means as a consequence of the recognition of said coded signal; said first section including:
a first unit (A) connected to the siren via an interface;
a second unit (B) connected in cascade to said first unit and designed to output a signal carrier, modulated in accordance with coded signal when the siren is operated; and
a third unit (C) connected in cascade to said second unit (B) and designed to send electromagnetic waves by means of a related antenna (D);
and said second section including:
a fourth unit (E) designed to receive said electromagnetic waves through a receiving antenna (H);
a fifth unit (F), connected in cascade to said fourth unit (E) for recognising said coded signal; and
a visual and acoustic signalling means (G) which are operated by said fifth unit (F) as a consequence of the recognition of said coded signal;
this warning signal emitter being **characterised in that** said acoustic signalling means (G) is located inside an helmet worn by the driver of said further vehicle.

## Patentansprüche

1. Fahrzeug mit einer Signalabgabe zur Warnung einer Umgebung mit einem Sirenensignal, wobei das Fahrzeug eine erste Baugruppe aufweist, die auf dem Fahrzeug mit Sirene montiert und die dafür vorgesehen ist, einen das Fahrzeug umgebenden Bereich mit elektromagnetischen Wellen zu bestrahlen, die ein kodiertes Signal übermitteln, das als Folge einer Inbetriebnahme der Sirene generiert wird; und bei dem eine zweite Baugruppe auf einem weiteren Fahrzeug montiert und in der Nähe zu einem Fahrer angeordnet ist, die die elektromagnetischen Wellen empfängt und mit Mitteln zur Signalanzeige verbunden ist, die einen Empfang des kodierten Signales anzeigen; wobei die erste Baugruppe umfaßt:
eine erste Einheit (A), die über eine Schnittstelle an die Sirene angeschlossen ist;
eine zweite Einheit (B), die kaskadiert an die erste Einheit angeschlossen und die dafür vorgesehen ist, einen Signalträger auszugehen, der mittels des kodierten Signales moduliert wird, wenn die Sirene aktiviert ist;
eine dritte Einheit (C), die kaskadiert mit der zweiten Einheit (B) verbunden ist und die dafür vorgesehen ist, elektromagnetische Wellen mit Hilfe einer geeigneten Antenne (D) abzustrahlen;
und wobei die zweite Baugruppe umfaßt:
eine vierte Einheit (E), die dafür vorgesehen ist, die elektromagnetischen Wellen mittels einer Empfangsantenne (H) zu empfangen;
eine fünfte Einheit (F), die kaskadiert an die vierte Einheit (E) angeschlossen ist und die dafür vorgesehen ist, das kodierte Signal zu erkennen;
und eine visuelle und akustische Anzeigeeinheit (G), die von der fünften Einheit (F) angesteuert wird, wenn das kodierte Signal erkannt wurde;
wobei die Einrichtung zur Abgabe des Warnsignals dadurch gekennzeichnet ist, daß die Anzeigeeinheit (G) zur akustischen Anzeige innerhalb eines Helmes angeordnet ist, der von einem Fahrer des weiteren Fahrzeugs getragen ist.

## Revendications

1. Véhicule pourvu d'un émetteur de signal à sirène avertissant le voisinage, comportant une première section montée sur le véhicule avec une sirène afin d'émettre, dans l'espace entourant le véhicule portant la sirène, un signal codé, porté par une onde électromagnétique, à la suite de la mise en fonctionnement de la sirène, et une seconde section montée sur un autre véhicule et située à proximité du conducteur, pour recevoir les ondes électromagnétiques et pour mettre en service par conséquent un moyen de signalisation à la suite de la reconnaissance du signal codé, la première section comportant une première unité (A) connectée à la sirène par l'intermédiaire d'une interface, une seconde unité (B) connectée en cascade à la première unité et conçue pour délivrer à sa sortie une porteuse de signal modulée en fonction du signal codé, lorsque la sirène est mise en service, et une troisième unité (C) connectée en cascade à la seconde unité (B) et conçue de manière à émettre des ondes électromagnétiques au moyen d'une antenne associée (D), la seconde section comportant une quatrième unité (E) conçue de manière à recevoir les ondes électromagnétiques par l'intermédiaire d'une antenne de réception (H), une cinquième unité (F) connectée en cascade à la quatrième unité (E) pour reconnaître le signal codé et un moyen de signalisation acoustique et visuelle (G) qui est mis en fonctionnement par la cinquième unité (F), à la suite de la reconnaissance du signal codé, cet émetteur de signal d'avertissement étant caractérisé en ce que le moyen de signalisation acoustique (G) est situé à l'intérieur d'un casque porté par le conducteur de l'autre véhicule.
